# EUROPEAN PATENT SPECIFICATION

(11) **EP 1 048 216 B1**
(45) Date of publication and mention of the grant of the patent: **15.06.2005**
(21) Application number: 99108320.5
(22) Date of filing: 28.04.1999
(51) Int. Cl.: A23C 9/18

(54) **A densified dry milk product**
Ein trockenes und verdichtetes Milchprodukt
Un produit laitier sec et densifié

(43) Date of publication of application: 02.11.2000
(73) Proprietor: Société des Produits Nestlé S.A., 1800 Vevey (CH)
(72) Inventor: Schroeder, Marco, 53229 Bonn (DE); Steffens, Klaus-Jürgen, 53359 Rheinbach (DE); Reimerdes, Ernst H., 1096 Cully/Villette (CH)
(74) Representative: Thomas, Alain

(56) References cited:
- DE-A- 2 433 650
- DE-U- 9 210 989
- FR-A- 2 574 254
- US-A- 3 121 635
- US-A- 3 241 975
- AN.: "Melk in de vorm van tabletten" MISSET'S ZUIVEL., vol. 64, no. 42, 1958, pages 931-932, XP002116209 P.C.NOORDVLIET B.V. ZEIST., NL

## Description

The present invention concerns a dry milk product comprising milk particles, said product being densified.

It is already known in the art to produce milk tablets, that means a product based on a milk powder, which has been compressed. The GB Patent 894'001 and FR Patent 1560810 concern such a product. The problem with these products is that they are based on a milk powder containing a very small amount of fat, that is skimmed milk powder. Furthermore, according to these procedures, they have to add a very great amount of additives, which can reach several %. This is also the case in US 3241975, in which a process to prepare dry milk products with desirable solubility, comprises preparing an intermadiate powder by mixing liquid milk with a salt-balance agent to impart maximum solubility to the milk casein. The aim of the present invention is to allow to bring to the consumer a dry milk-based product which can contain up to 50 % fat. The problem with tabletted milk powder is the presence of fat, because by the reconstitution in water of said tablets, the fat of the milk has a great tendancy to come at the surface of the liquid. This is absolutely not acceptable and a solution has to be found for solving said problem.

The present invention allows to solve this problem and brings to the consumer a product, which has no fat on the surface when reconstituted in a fluid, such as water, coffee or milk. Furthermore, the product according to the invention has a very quick time for reconstitution in water as it will be mentioned below.

The present invention concerns a dry milk product comprising milk particles, which is densified, containing between 0 and 50 % fat, having a loose density comprised between 0.40 and 0.80 g/ml, a porosity comprised between 0.35 and 0.65 and being densified at a densification degree comprised between 40 and 70% and obtainable by a process comprising the steps of :
- wetting and agglomerating the milk-based particles with a fluid for obtaining a moisture content comprised between 4 and 15 %,
- sieving the wetted particles through a sieve having mesh openings of a diameter comprised between 0.5 and 3 mm,
- densifying the sieved particles and
- drying the product to reach a moisture level of around 3%.
The densification in the present specification means a compression, a compaction, a granulation, an extrusion, a spheronisation or any other procedure for reducing the volume of a milk-based powder on a certain percentage. This densification is known in the art and it is possible to use any machinery for reaching this aim. The way of measuring this ratio is known and is the reduction of volume from loose milk particles compared with the final densified volume of particles.

The fat content of the product according to the invention is preferably comprised between 20 and 40 %. Under fat, in the present specification, we understand milk fat, for example endogenous fat, or vegetable or animal fats, that is exogenous fats, as explained below.

The loose density in the specification is the weight of the final product per volume, that means the weight with the air. On the contrary, the absolute density is also a weight per volume, but in this case it is the density without the air. Both of these densities are measured according to procedures, which are known in the art, for example with a Beckmann picnometer.

The porosity is also an important factor of the product according to the invention. This factor is defined as 1 minus the ratio loose density on absolute density.

The milk particles, which can be used according to the invention are not critical and can be taken from the group consisting of milk particles of skimmed milk powder, partially skimmed milk powder, whole milk powder, filled milk powder, adapted milk powder, infant milk powder, cream powder, combination of milk powder with cocoa, chocolate or coffee, non-dairy milk powder and all of the ingredients of milk eventually in mixture with other ingredients, such as fructose, saccharose and others. A skimmed milk powder is a milk practically without fat (less than 1.5 %). A partially skimmed milk powder contains between 1.5 and 26 % fat. A whole milk powder contains more than 26 % fat. A filled milk powder is a skimmed milk powder with an addition of vegetable fat. An adapted milk powder is a milk powder, which is near from a mother milk. Under non-dairy milk powder, we understand a partially or totally synthetic milk product, such as a coffee whitener or others.

The powder which is be used can be manufactured with spray-drying, freeze-drying or any other procedure of drying in the art.

The densified milk product must have a certain breaking strength, so that by the manipulation of the densified product, the product will not fall in powder. The breaking strength is normally comprised between 20 and 250 N. The factor is measured according to known technique, for example with an Heberlein or Schleuniger hardness tester. The breaking strength is preferably comprised between 35 and 180 N.

It is also possible to have in the product of the invention an additive taken in the group consisting of a binding agent, a stabilising agent, an emulsifying agent and a wetting agent. As a binding agent, we can use a maltodextrin, such as a sirup of glucose, a caseinate, an alginate, a carragheenan. As a stabilising agent, the product can contain an alginate or a carragheenan. As an emulsifying agent, we can use lecithin, caseinate, saccharosemonostearate, glycerolester. As a wetting agent, we can add also an emulsifyer.

The amount of the additives in the final product is normally comprised between 0 and 10 %.

For the final product, it is important to know how long it takes to reconstitute the tablet in water. This reconstitution takes normally between 15 and 120 sec, depending of the composition of the used powder. The reconstitution integrates three factors, which are the sinking time, the desintegration time and the dissolution time. This reconstitution time is measured by dissolving the product in water at a temperature depending on the type of powder used : for example, with a skimmed milk powder, the temperature of the water is 20 °C, with a whole milk powder, it is at 40 °C and with a non-dairy creamer, it is at 70 °C. Another important factor is the time of sinking, that means how long it takes for the tablet to disappear totally in the water. According to the invention, this time is comprised between 0 and 10 sec.

The form of the product is not critical and can be any geometric shape, from a spherical to cylindrical and others. The weight of every densified product can vary very broadly from 0.1 gram to 50 g.

The present invention concerns further the process for the manufacture of the above mentioned product, comprising the following steps :
- the milk-based particles are wetted and agglomerated with a fluid for obtaining a moisture content comprised between 4 and 15 %,
- the wetted particles are sieved through a sieve having mesh openings of a diameter comprised between 0.5 and 3 mm,
- the sieved particles are densified and
- the product is dried to reach a moisture level of around 3 %.

Under milk-based particles, we understand in the present specification either a pure milk particles powder, or a pure milk particles powder in dry mixture with the additives mentioned above, or a milk particles powder in dry mixture with an extra powder. This extra powder is a powder of the following ingredients taken alone or in combination: lactose, maltodextrine, starch, modified starch or other carbohydrates, like glucose, fructose and saccharose. This extra powder can be in an amount of up to 35 % of the total mixture.

The wetting of the particles is carried out with nozzles, which sprayed the fluid on the milk powder. Under agglomeration in the present specification, we understand also a granulation. This step can be carried out through a plate, or a drum, or a fluidised bed or by vibration. The moisture content of the milk powder is preferably between 5 and 10 %.

The sieving is made with classical device known in the art. The mesh openings of the sieve is preferably comprised between 0.8 and 2.0 mm.

As already said before, the densification is either carried out as a compression, a compaction, a granulation, an extrusion or any other procedure for reducing the volume of a milk-based powder on a certain percentage. The device used for this procedure is either a modified tabletting machine, a compacting machine, an extruder or another special device. The degree of compaction of the milk powder is comprised between 40 and 70 %.

The wetting of the milk particles is made with a fluid taken in the group consisting of water, water containing a binder, water containing a stabilising agent and water containing an emulsifier and/or a wetting agent. It is also possible to use the water containing a combination of the binder, the emulsifier and the wetting agent. Before or after densification, the form can be perforated with needles to decrease the sinking time.

At the end of the process a drying step is carried out with a classical procedure , that is by contact, convection or radiation, like vacuum, high frequency, microwave, dried air.

At the end of the drying step, it is possible to make a spraying of a binding solution or a steam for reducing the abrasion, increasing the breaking strength or stabilising the external free fat. Finally, the densified product can be put into packaging.

The following description is now made in relation with the examples, which give different possibilities of the invention.

### Example 1

Two kg of coffee-mate containing 40 % fat (hardened coconut oil) are wetted with 175 ml of water for having then a moisture content of the powder of 6.9 %. Simultaneously a granulation is made on a plate and the obtained powder is sieved on a sieve having mesh openings of 1.0 mm. Directly after, the powder is compressed with a 3-punchpress at a compression degree of 54 %. A parallelepipedic compressed product of dimensions of 25 mm on 14 mm and 15 mm and presenting perforations is produced. Every tablet has a weight of 3.5 g, a loose density of 0.70 g/ml, an absolute density of 1.19 g/ml, a porosity of 0.40. The reconstitution time of this tablet is of 45 sec with little stirring at 70 °C with demineralised water. And it has a breaking strength of 180 N.

### Example 2

Two kg of skimmed milk powder having a fat content of 1 % are wetted with water containing 20 % of skimmed milk powder for obtaining a moisture content of the powder of 8.8 %. Simultaneously, a granulation is made by vibration and the obtained powder is sieved on a sieve having mesh openings of 1.0 mm. Directly after, the powder is compressed with an excenterpress at a compression degree of 57 %. A circular product of a diameter of 20 mm and a thickness of 7.5 mm is produced : this tablet has furthermore small perforations of 1 mm diameter. Every tablet has a weight of 1.5 g, a loose density of 0.62, an absolute density of 1.40 g/ml, a porosity of 0.56 and a breaking strength of 50 N. The reconstitution time of this tablet is of 30 sec. with little stirring or shaking at a temperature of 40 °C.

## Claims

1. A dry milk product comprising milk particles, which is densified, containing between 0 and 50 % fat, having a loose density comprised between 0.40 and 0.80 g/ml, a porosity comprised between 0.35 and 0.65 and being densified at a densification degree comprised between 40 and 70 % and is obtainable by a process comprising the steps of :
- wetting and agglomerating the milk-based particles with a fluid for obtaining a moisture content comprised between 4 and 15 %,
- sieving the wetted particles through a sieve having mesh openings of a diameter comprised between 0.5 and 3 mm,
- densifying the sieved particles and
- drying the product to reach a moisture level of around 3 %.

2. A dry milk product according to claim 1, wherein the milk particles are taken from the group consisting of milk particles of skimmed milk powder, partially skimmed milk powder, whole milk powder, filled milk powder, adapted milk powder, infant milk powder, cream powder, combination of milk powder with cocoa, chocolate or coffee, non-dairy creamer.

3. A dry milk product according to any of claims 1 or 2, having a breaking strength comprised between 20 and 250 N.

4. A dry product according to any of claims 1 to 3, containing further an additive taken in the group consisting of a binding agent, a stabilising agent, an emulsifying agent and a wetting agent.

5. A dry product according to claim 4, wherein the amount of additive is comprised between 0 and 10 %.

6. A dry product according to any of claims 1 to 5, wherein the reconstitution time is comprised between 15 and 120 sec.

7. A dry product according to claim 1, wherein the milk particles are wetted with a fluid taken from the group consisting of water, water containing a binder, water containing an emulsifier and water containing a wetting agent.

## Patentansprüche

1. Trockenmilchprodukt mit Milchteilchen, das verdichtet ist, das zwischen 0 und 50 % Fett enthält, eine lose Dichte zwischen 0,40 und 0,80 g/ml, eine Porosität zwischen 0,35 und 0,65 aufweist und das mit einem Verdichtungsgrad verdichtet ist, der zwischen 40 und 70 % liegt, und das erhältlich ist nach einem Verfahren, das die Schritte umfaßt:
- Befeuchten und Agglomerieren der Teilchen auf Milchbasis mit einem Fluid, um einen Feuchtigkeitsgehalt zu erhalten, der zwischen 4 und 15 % liegt,
- Sieben der befeuchteten Teilchen durch ein Sieb mit Maschenöffnungen mit einem Durchmesser, der zwischen 0,5 und 3 mm liegt,
- Verdichten der gesiebten Teilchen und
- Trocknen des Produkts, so daß ein Feuchtigkeitsgehalt von etwa 3 % erreicht wird.

2. Trockenmilchprodukt nach Anspruch 1, wobei die Milchpartikel aus der Gruppe genommen sind, die besteht aus Milchteilchen von Magermilchpulver, teilweise entfettetem Milchpulver, Vollmilchpulver, gefülltem Milchpulver, angepaßtem Milchpulver, Kleinkindermilchpulver, Sahnepulver, einer Kombination von Milchpulver mit Kakao, Schokolade oder Kaffee, Getränkeweißer auf Nichtmilchbasis.

3. Trockenmilchprodukt nach irgendeinem der Ansprüche 1 oder 2, das eine Bruchfestigkeit aufweist, die zwischen 20 und 250 N liegt.

4. Trockenprodukt nach irgendeinem der Ansprüche 1 bis 3, das außerdem einen Zusatzstoff enthält, der aus der Gruppe genommen ist, die besteht aus einem Bindemittel, einem Stabilisierungsmittel, einem Emulgiermittel und einem Benetzungsmittel.

5. Trockenprodukt nach Anspruch 4, wobei die Menge des Zusatzstoffs zwischen 0 und 10 % liegt.

6. Trockenprodukt nach irgendeinem der Ansprüche 1 bis 5, wobei die Rekonstituierungszeit zwischen 15 und 120 s liegt.

7. Trockenprodukt nach Anspruch 1, wobei die Milchteilchen mit einem Fluid befeuchtet werden, das aus der Gruppe genommen ist, die besteht aus Wasser, bindemittelhaltigem Wasser, emulgatorhaltigem Wasser und netzmittelhaltigem Wasser.

## Revendications

1. Produit de lait sec comprenant des particules de lait, qui est densifié, contenant 0 à 50 % de matière grasse, ayant une densité apparente comprise entre 0,40 et 0,80 g/ml, une porosité comprise entre 0,35 et 0,65 et densifié à un degré de densification compris entre 40 et 70 %, et qui peut être obtenu par un procédé comprenant les étapes de :
- mouillage et agglomération de particules à base de lait avec un liquide pour obtenir une teneur en humidité comprise entre 4 et 15 %,
- tamisage des particules mouillées à travers un tamis ayant des ouvertures de mailles d'un diamètre compris entre 0,5 et 3 mm,
- densification des particules tamisées et
- séchage du produit pour atteindre un taux d'humidité d'environ 3 %.

2. Produit de lait sec selon la revendication 1, dans lequel les particules de lait sont choisies dans le groupe formé par des particules de lait écrémé en poudre, de lait partiellement écrémé en poudre, de lait entier en poudre, de lait à matière grasse substituée en poudre, de lait adapté en poudre, de lait en poudre pour enfants, de crème en poudre, d'une association de lait en poudre avec du cacao, du chocolat ou du café, de succédané de crème non laitier.

3. Produit de lait sec selon l'une quelconque des revendications 1 ou 2, ayant une résistance à la rupture comprise entre 20 et 250 N.

4. Produit sec selon l'une quelconque des revendications 1 à 3, contenant de plus un additif choisi dans le groupe formé par un agent liant, un agent stabilisant, un agent émulsionnant et un agent mouillant.

5. Produit sec selon la revendication 4, dans lequel la quantité d'additif est comprise entre 0 et 10 %.

6. Produit sec selon l'une quelconque des revendications 1 à 5, dans lequel le temps de reconstitution est compris entre 15 et 120 secondes.

7. Produit sec selon la revendication 1, dans lequel les particules de lait sont mouillées avec un liquide choisi dans le groupe formé par l'eau, l'eau contenant un liant, l'eau contenant un agent émulsionnant et l'eau contenant un agent mouillant.
